# EUROPEAN PATENT SPECIFICATION

(11) **EP 3 825 542 B1**
(45) Date of publication and mention of the grant of the patent: **12.07.2023**
(21) Application number: 21162758.3
(22) Date of filing: 16.03.2021
(51) Int. Cl.: F03B 17/00

(54) **HYDROELECTRIC POWER STATION, HYDROELECTRIC POWER SYSTEM AND METHOD FOR THE GENERATION OF ELECTRICAL ENERGY FROM HYDROELECTRIC POWER**
WASSERKRAFTWERK, WASSERKRAFTSYSTEM UND VERFAHREN ZUR ERZEUGUNG VON ELEKTRISCHER ENERGIE AUS WASSERKRAFT
CENTRALE HYDROÉLECTRIQUE, SYSTÈME HYDROÉLECTRIQUE ET MÉTHODE DE PRODUCTION D'ÉNERGIE ÉLECTRIQUE À PARTIR DE L'ÉNERGIE HYDROÉLECTRIQUE

(43) Date of publication of application: 26.05.2021
(73) Proprietor: Beqo, Artur, 9401 Vlorë (AL)
(72) Inventor: Beqo, Artur, 9401 Vlorë (AL)
(74) Representative: Cohausz & Florack

(56) References cited:
- WO-A1-2009/078698
- WO-A2-2013/141826
- FR-A1- 3 100 288
- GB-A- 484 564

## Description

The invention relates to a hydroelectric power station for the generation of electrical energy from hydroelectric power, a hydroelectric power system and a method for the generation of electrical energy from hydroelectric power, in particular using a hydroelectric power station according to a first aspect of the disclosure.

Any discussion of the prior art throughout the specification should in no way be considered as an admission that such prior art is widely known or forms parts of common general knowledge in the respective field.

Hydroelectric power stations provide renewable energy in large quantities. In general, a hydroelectric power station comprises at least one inlet pipe, at least one outlet pipe and at least one water turbine for driving a generator. Water is guided by the at least one inlet pipe to the at least one water turbine, where the water is driving the at least one water turbine. In this way, the hydropower is turned into mechanical energy by the at least one water turbine and afterwards the mechanical energy is transformed into electrical energy by a generator. Finally, the water is discharged by the at least one outlet pipe. In doing so, hydropower is turned into electrical energy. The outlet pipe may for example discharge into a tail box.

The hydropower is usually provided by rivers and reservoirs. Unfortunately, not all available hydropower may completely be transformed into electrical energy for examples due to the degree of efficiency of hydroelectric power stations known from the state of the art. Hence, the efficiency and energy output of known hydroelectric power stations is substantially lower than the hydropower which may ideally be generated.

FR 3 100 288 A1 discloses a mini hydrodynamic power plant. The hydrodynamic power plant comprises a basin and a reservoir. The reservoir is connected to the basin via a valve and a turbine. By opening the valves the hydrodynamic power plant is supplied by a water current comprising kinetic and potential energy. Under the water level of the water in the basin a strainer is arranged via which a water may be circulated through the supply pipe back towards the reservoir and the basin.

Therefore, it is an object of the present invention to provide a hydroelectric power station and a method for generating electrical energy from hydroelectric power, wherein enhanced efficiency and increased energy output are provided.

According to a first teaching of the present disclosure, above object is achieved by a hydroelectric power station for the generation of electrical energy from hydroelectric power with at least one inlet pipe for supplying a motive water flow to the hydroelectric power station, with at least one outlet pipe for discharging an outlet water flow, with at least one water turbine for driving a generator to produce electrical energy, with at least one water tank, particularly comprising an outlet and an inlet, with at least one ejector, with at least one water loop circuit, wherein the at least one water turbine, the at least one water tank and the at least one ejector are fluidically connected by the at least one water loop circuit, wherein the at least one inlet pipe is fluidically connected to the at least one ejector, wherein the at least one outlet pipe is fluidically connected to the at least one water loop circuit, wherein the at least one water loop circuit is configured to guide a circulating water flow from the at least one water tank, alongside the at least one ejector, through the at least one water turbine back into the at least one water tank, wherein the at least one ejector in particular is configured to at least partly suck the circulating water flow from the at least one water tank, wherein the at least one inlet pipe is configured to provide the motive water flow to the at least one water loop circuit through the at least one ejector, wherein the current of the motive water flow substantially corresponds to the current of the outlet water flow and wherein the at least one ejector is located at the outlet of the at least one water tank.

By providing a hydroelectric power station with at least one water loop circuit, wherein the at least one water turbine is an integral part of the water loop circuit, a high amount of the available hydropower may be transformed into electrical energy. Therefore, the efficiency and the energy output of the hydroelectric power station according to the first aspect may be increased. Preferably, the water volume and/or the water mass of the motive water flow substantially correspond to the water volume and/or the water mass of the outlet water flow.

Preferably, the at least one water loop circuit enables a circulating water flow in a loop, wherein a substantially constant amount of water is circulating in the at least one water loop circuit. In particular, the circulating water flow is at least partially guided vertically in the at least one water loop circuit during a cycle or a loop. With the at least one water turbine being an integral part of the at least one water loop circuit, the circulating water flow drives the at least one water turbine, whereby electrical energy is created.

In particular the different components of the hydroelectric power station may be connected to each other fluidically via pipes. These pipes may for example at least partially be constructed as penstocks. The amount of energy which may be produced by the hydroelectric power plant in particular is dependent on the supplied motive water flow, in particular dependent on the kinetic energy of the supplied motive water fluid. Preferably, the supplied motive water fluid is originating from a river or a reservoir.

Preferably, the current of the motive water flow and the current of the circulation water flow substantially sum up to the current of a mix water flow. The mix water flow for example comprises the motive water flow and the circulation water flow. It is preferred that the current of the motive water flow substantially corresponds to the current of the outlet water flow. The current of the circulating water flow preferably is bigger than the current of the motive water flow and/or the outlet water flow. Preferably, the current of the circulating water flow is substantially constant during the usage of the hydroelectric power station. The current of a water flow in this disclosure in particular refers to the quantity or the volume of said water flow per unit time, in particular per minute.

The at least one ejector is located at the outlet of the at least one water tank. The ejector may also be located in the proximity of the outlet of the water tank. Preferably, the ejector is located with regard to the outlet in such a way that the motive water flow being supplied by the ejector is able to suck water being comprised in the water tank in an efficient manner. Preferably, the ejector is arranged in between the outlet and the outlet pipe. If the at least one ejector is located at the outlet of the at least one water tank, the suction power of the at least one ejector on the circulating water flow from the at least one water tank is enhanced. Thus, the efficiency and the energy output of the hydroelectric power station are further increased.

According to another embodiment, the at least one water turbine may be located at the inlet of the at least one water tank. The at least one water turbine may also be located in the proximity of the inlet of the water tank. Preferably, the at least one water turbine is located with regard to the inlet in such a way that the energy being supplied to the at least one turbine by the water flowing through the at least one water loop circuit is maximized. In this way a majority of the hydropower of the water flowing through the at least one water loop circuit may be used for the generation of electrical energy, so that the energy output of the at least one water turbine may be enhanced.

Another embodiment is characterized in that the at least one water tank may comprise at least two chambers, wherein the at least two chambers may be fluidically connected by at least one more water turbine. The at least two chambers may be connected via a connection pipe, wherein the connection pipe may comprise the at least one more water turbine. By guiding the circulating water flow flowing at least partly through the water loop circuit through the at least one more water turbine, another water turbine besides the at least one water turbine may generate additional energy from the hydropower. The at least one more water turbine preferably may drive a different or the same generator in order to produce electric energy as the at least one water turbine.

According to another embodiment, at least one further water turbine may be preferably fluidically connected to the at least one outlet pipe. The at least one further water turbine may also be arranged inside an end zone of the at least one outlet pipe. By employing the at least one further water turbine in said way, the remaining hydropower of the discharged outlet water flow may be used to generate additional electrical energy. Hence, the at least one further water turbine may boost the energy output of the hydroelectric power station without influencing the energy output of other water turbines of the hydroelectric power station.

According to a further embodiment, the at least one water turbine, the at least one more water turbine and/or the at least one further water turbine is a bulb turbine and/or a Kaplan turbine. Bulb turbines as well as Kaplan turbines exhibit a large efficiency, so that the hydropower may be efficiently transformed into electrical energy.

According to another embodiment, the at least one water loop circuit may comprise at least one tapering behind the at least one ejector, wherein in particular the at least one tapering is configured to support the at least one ejector. Being arranged behind the at least one ejector is in the context of the present disclosure in particular defined in the direction of the water flow of the hydroelectric power station. The tapering may boost the suction power of the at least one ejector and thus may increase the circulating water flow, so that the electrical energy generated from the circulating water flow by the at least one water turbine and/or the at least one more water turbine may be increased.

According to another embodiment, the at least one water tank is at least partly located at the lowest point of the at least one water loop circuit. In particular, the at least one water tank is the component of the hydroelectric power station which is arranged substantially in the lowest plane of the hydroelectric power station. By being located in the aforementioned manner, the suction power of the at least one ejector may be supported, thus increasing the efficiency and the energy output of the hydroelectric power station.

Another embodiment is characterized in that the at least one outlet pipe may be fluidically connected to the at least one water loop circuit at the highest point of the at least one water loop circuit. In particular, the at least one outlet pipe is the component of the hydroelectric power station which is arranged substantially in the highest plane of the hydroelectric power station. Thus, the outlet water flow may be discharged at the highest point of the at least one water loop circuit. In doing so, the energy of the outlet water flow is at least partly, in particular to a great extent, transferred to the circulating water flow. The energy transferred to the circulating water may be transformed into additional electrical energy, so that the energy output of the hydroelectric power station may be increased. The at least one outlet pipe is preferably connected to the at least one water loop circuit in between the injector and the at least one water turbine.

According to another embodiment, the at least one ejector is fluidically connected to the at least one water turbine and to at least one outlet pipe via a vessel. The vessel may comprise a fluidical opening to the atmosphere, so that the atmospheric pressure may affect the water or the water flow in the vessel. The vessel may comprise to chambers which may be fluidically connected to each other. One of the chambers or both of the chambers may comprise a fluidical opening to the atmosphere.

Another embodiment is characterized in that the water tank, in particular one chamber of the water tank, comprises a return pipe, wherein the return pipe connects the water tank or one chamber of the water tank fluidically to the vessel while bypassing the at least one water turbine. Hereby, the water tank, in particular one chamber of the water tank, is able to communicate with the atmosphere, in particular with the atmospheric pressure, via the vessel, in particular via a fluidical opening of the vessel. Hereby, the atmospheric pressure may enable to push the water in the vessel in the direction of the at least one water turbine. This also enables the ejector to suck in more water via the motive water fluid which further enhances the electrical energy production of the hydroelectric power plant.

According to another embodiment, the hydroelectric power station may comprise a discharge vessel which may be arranged fluidically behind the least one further water turbine which is fluidically connected to the at least one outlet pipe. Hereby, the water which exits the at least one further water turbine may be supplied to the discharge vessel.

Another embodiment is characterized in that the motive water flow is supplied to the inlet pipe via a reservoir pipe, the reservoir pipe is fluidically connected to a bypass inlet pipe, the bypass inlet pipe is fluidically connected to at least one bypass turbine, the bypass turbine is fluidically connected to a bypass outlet pipe, wherein the bypass outlet pipe and the at least one outlet pipe discharge into a tail box, and wherein the motive water flow is at least partly divertible via least one valve from the inlet pipe to the bypass inlet pipe. Hereby, a bypass route for the motive water flow may be provided depending on the status of the hydroelectric power station. Preferably, at least one valve is arranged upstream of the at least one bypass turbine and at least one further valve is arranged downstream of the at least one bypass turbine. The valves may for example be arranged inside the bypass inlet pipe and the bypass outlet pipe. The at least one valve may preferably be a butterfly valve. By regulating the at least one valve, the motive water flow may be diverted into the bypass pipes and the bypass turbine which in particular may be beneficial when the rest of the hydroelectric power station is defect and needs to be repaired or when a maintenance procedure of the other parts of the hydroelectric power station is due. During conventional operation of the hydroelectric power station, the bypass turbine may be isolated via the at least one valve from the motive water flow and thus not in operation. Preferably, the bypass turbine is an in-line hydro turbine, in particular an in-line pressure reducer hydro turbine. The tail box may for example be a reservoir in the sense of the present disclosure.

According to a second aspect of the present invention, the above object is achieved by a hydroelectric power system, wherein the hydroelectric power system comprises at least two hydroelectric power stations according to the first aspect and wherein the at least two hydroelectric power stations are connected in series. In particular, an inlet pipe or a reservoir pipe of the downstream hydroelectric power station is connected to the tail box of the upstream hydroelectric power station. Hereby, at least two power stations may be connected in a beneficial manner. By aligning at least two hydroelectric power stations in series, the amount of hydroelectric power being generated may further be enhanced. In particular, it is preferred to connect two hydroelectric power station in series, wherein the upstream or the first hydroelectric power station is substantially arranged at half the height between the reservoir or the river and the lowest level of the downstream or second hydroelectric power station.

According to a third aspect of the present disclosure, the above object is achieved by a method for generating electrical energy from hydroelectric power, using a hydroelectric power station according to the first aspect, wherein a motive water flow is supplied by at least one inlet pipe to at least one ejector, wherein the motive water flow is fed into at least one water loop circuit by the at least one ejector, wherein water is sucked from at least one water tank by the motive water flow in order to generate a circulating water flow, wherein an outlet water flow is separated from the circulating water flow and the outlet water flow is discharged from the at least one water loop circuit by at least one outlet pipe, wherein the circulating water flow is guided to at least one water turbine for driving a generator by the at least one water loop circuit, wherein the circulating water flow is guided into the at least one water tank by the at least one water loop circuit and, wherein the water volume of the motive water flow substantially corresponds to the water volume of the outlet water flow.

Hereby, the proportion of hydropower transformed into electrical energy may be increased, so that a higher efficiency and a higher energy output may be achieved.

According to another embodiment, the circulating water flow may be sucked from an outlet of the at least one water tank by the at least one ejector. If the circulating water flow is sucked from the outlet of the at least one water tank, a large amount of the suction power of the at least one ejector may be transferred to the circulating water flow from the at least one water tank. Thus, the efficiency and the energy output of the hydroelectric power station may be further enhanced.

Another embodiment is characterized by the circulating water flow being fed into the at least one water tank after passing the at least one water turbine. In doing so, a large amount of the hydropower may be used for the generation of electrical energy, so that the energy output of the hydroelectric power station may be enhanced.

According to a further embodiment, the circulating water flow may be guided through at least two chambers of the at least one water tank, wherein the circulating water flow may be guided through at least one more water turbine in between the at least two chambers of the at least one water tank. Thus, by guiding the circulating water flow through the at least one more water turbine the at least one more water turbine may generate additional energy from the available hydropower.

According to another embodiment, the outlet water flow may be guided to at least one further water turbine by the at least one outlet pipe. By guiding the outlet water flow through the at least one further water turbine the remaining hydropower of the discharged outlet water flow may be used to generate electrical energy. Thus, the energy output may be increased by the at least one further water turbine without influencing the other water turbines of the hydroelectric power station.

According to a further embodiment, the outlet water flow may preferably be separated from the circulating water flow and the outlet water flow may be discharged from the at least one water loop circuit by the at least one outlet pipe at the highest point of the at least one water loop circuit. In this way, the energy of the motive water flow may be transferred to the circulating water flow to a great extent. The energy transferred from the motive water flow to the circulating water flow and to the outlet water flow may be transformed into additional electrical energy, so that the energy output of the hydroelectric power station may be increased.

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
- Fig. 1: schematically shows a first embodiment of a hydroelectric power station;
- Fig. 2: schematically shows a second embodiment of a hydroelectric power station; and
- Fig. 3: schematically shows an embodiment of a hydroelectric power system.

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details.

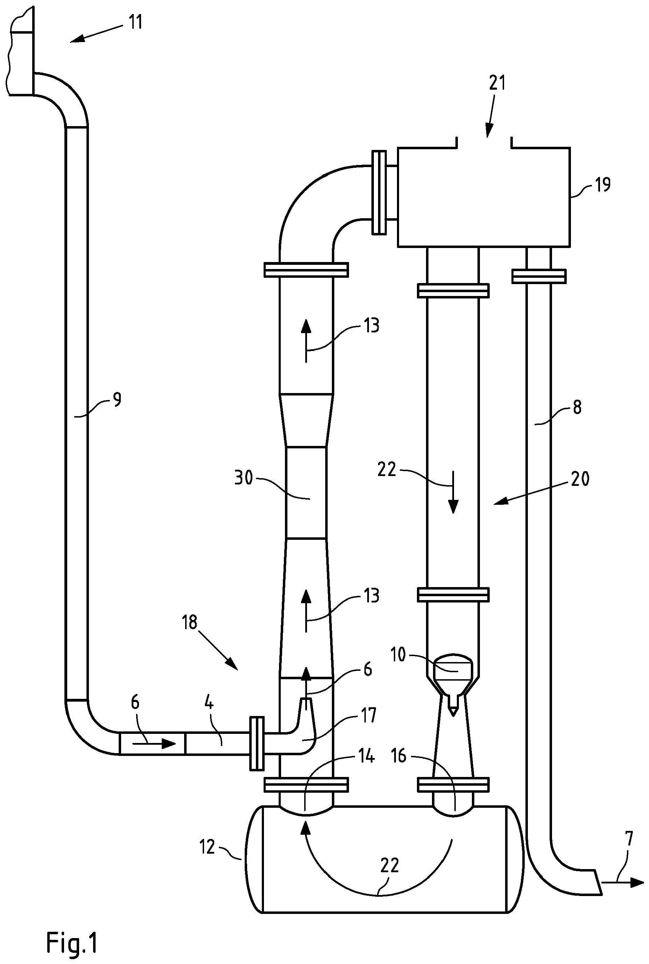

In Fig. 1 a hydroelectric power station 2 for the generation of electrical energy from hydroelectric power is shown. The hydroelectric power station 2 comprises an inlet pipe 4 for supplying a motive water flow 6 to the hydroelectric power station 2 and an outlet pipe 8 for discharging an outlet water flow 7. The inlet pipe 4 is fluidically connected to a reservoir pipe 9 which is further connected to a reservoir 11 which is arranged at a certain height in order to provide the hydroelectric power station with the motive water flow 6.

Further, the hydroelectric power station 2 has a water turbine 10 for driving a generator, a water tank 12 comprising an outlet 14 and an inlet 16, and an ejector 18 comprising an ejector nozzle 17. In addition, the hydroelectric power station 2 exhibits a water loop circuit 20, wherein the water turbine 10, the water tank 12 and the ejector 18 are fluidically connected by the at least one water loop circuit 20. Moreover, the inlet pipe 4 is fluidically connected to the ejector 18 and the outlet pipe 8 is fluidically connected to the water loop circuit 20. In particular, the water loop circuit 20 is connected to the outlet pipe 8 via a vessel 19 which comprises an opening 21 via which the vessel 19 is fluidically connected to the atmosphere.

The water loop circuit 20 is configured to guide a circulating water flow 22 from the water tank 12, alongside the ejector 18, through the water turbine 10 back into the water tank 12. From the ejector nozzle 17 to the water tank 21 the circulating water flow 22 additionally comprises the motive water flow 6 resulting in a mixture water flow 13. The circulating water flow is at least partially guided vertically in the at least one water loop circuit during a cycle. The ejector 18 is configured to suck the circulating water flow 22 from the at least one water tank 12. The inlet pipe 4 is configured to provide the motive water flow 6 to the water loop circuit 20 through the ejector 18.

As shown in Fig. 1 the ejector nozzle 17 is located at the outlet 14 of the water tank 12. Thus, the circulating water flow 22 is sucked from the outlet 14 of the water tank by the ejector nozzle 17. In addition, the water turbine 10 is located at the inlet 16 of the water tank 12. In doing so, the circulating water flow 22 is fed into the water tank 12 after passing the water turbine 10. Additionally, the hydroelectric power station 2 has a tapering 30 in the water loop circuit 20 behind the ejector nozzle 17. The tapering 30 is configured to support the ejector nozzle 17 and may also be part of the ejector 18.

The water tank 12 is located at the lowest point of the water loop circuit 20, while the outlet pipe 8 is fluidically connected to the water loop circuit 20 at the highest point of the water loop circuit 20. Hence, at the highest point of the water loop circuit 20 the outlet water flow 7 is separated from the circulating water flow 22 and the outlet water flow 7 is discharged from the water loop circuit 20 by the outlet pipe 8. In this way, the energy output of the hydroelectric power station 2 is increased.

The current of the motive water flow 6 and the current of the circulation water flow 22 substantially sum up to the current of the mix water flow 13. The current of the motive water flow 6 substantially corresponds to the current of the outlet water flow 7. The current of the circulating water flow 22 preferably is bigger than the current of the motive water flow 6 and/or the outlet water flow 7. Preferably, the current of the circulating water flow 22 is substantially constant during the usage of the hydroelectric power station 2. The current of a water flow in particular refers to the quantity or the volume of said water flow per time unit.

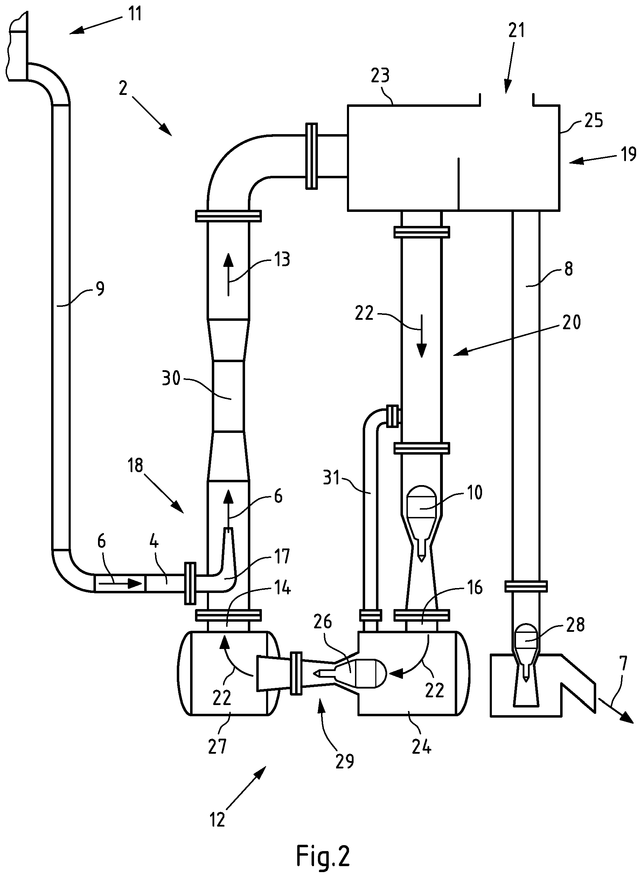

Fig. 2 shows a second embodiment of a hydroelectric power station 2. The hydroelectric power station additionally comprises a water tank 12 with a first chamber 24 and a second chamber 27, wherein the two chambers 24, 27 are fluidically connected by a connection pipe 29, wherein the connection pipe 29 may comprises one more water turbine 26. At least a part of the connection pipe 29 may comprise a draft tube of the one more water turbine 26 and at least a part of the connection pipe 29 may be the water turbine 26.

Furthermore, the vessel 19 comprises a first chamber 23 and a second chamber 25 which are fluidically connected to each other. The second chamber 25 comprises the opening 21 via which the second chamber 25 of the vessel 19 is fluidically connected to the atmosphere.

The first chamber 24 of the water tank 12 comprises a return pipe 31, wherein the return pipe 31 connects first chamber 24 of the water tank 12 fluidically to the vessel 19 and in particular to the opening 21 of the vessel 19.

The circulating water flow 22 is guided through the two chambers 24, 27 of the water tank 12, wherein the circulating water flow 22 is guided through the one more water turbine 26 in between the two chambers 24, 27 of the water tank 12. Besides, one further water turbine 28 is fluidically connected to the outlet pipe 8, so that the outlet water flow 7 is guided to the one further water turbine 28 by the outlet pipe 8.

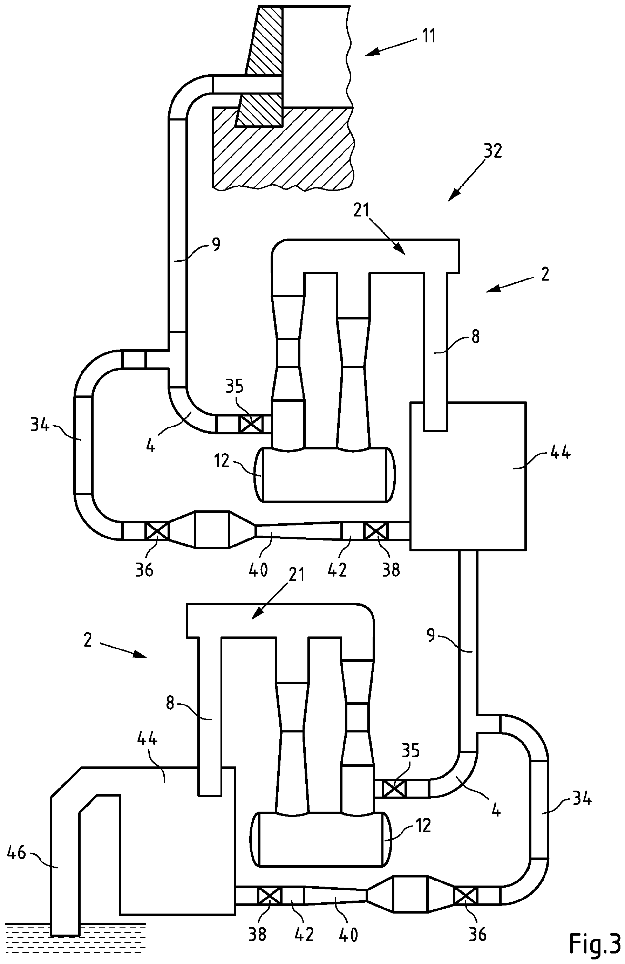

Fig. 3 schematically shows an embodiment of a hydroelectric power system 32 comprising two hydroelectric power stations 2. The hydroelectric power stations 2 may generally be constructed as specified in the disclosure, in particular as a hydroelectric power station 2 depicted in Figs. 1 or 2.

Differing from the embodiments of the hydroelectric power stations 2 depicted in Figs. 1 and 2, the hydroelectric power stations 2 comprise a bypass inlet pipe 34 which is fluidically connected to the reservoir pipe 9. The inlet pipe 4 is also connected to the reservoir pipe 9 and comprises an inlet valve. Via valves 36 and 38 the motive water flow 6 may be diverted from the inlet pipe 9 to the bypass inlet pipe 34 and vice versa. The bypass inlet pipe 34 is fluidically connected to at least one bypass turbine 40, wherein the first valve 36 is arranged before the bypass turbine 40. The bypass turbine is 40 further fluidically connected to a bypass outlet pipe 42, wherein the bypass outlet pipe 42 may comprise the second valve 38. The bypass outlet pipe 42 and the at least one outlet pipe 8 discharge into a tail box 44.

The tail box 44 is further connected to a reservoir pipe 9 via which a second hydroelectric power station 2 is connected in series. The second hydroelectric power station 2 is constructed similarly to the first hydroelectric power station 2. The tail box 44 of the second hydroelectric power station 2 further comprises a discharge pipe 46.

The water turbines 10, 26, 28 and 40 can be a bulb turbine and/or a Kaplan turbine.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more". Unless specifically stated otherwise, the term "some" refers to one or more.

## Claims

1. Hydroelectric power station (2) for the generation of electrical energy from hydroelectric power
- with at least one inlet pipe (4) for supplying a motive water flow (6) to the hydroelectric power station (2),
- with at least one outlet pipe (8) for discharging an outlet water flow (7),
- with at least one water turbine (10) for driving a generator to produce electrical energy,
- with at least one water tank (12), wherein the water tank (12) comprises an outlet (14) and an inlet (16),
- with at least one ejector (18),
- with at least one water loop circuit (20),
- wherein the at least one water turbine (10), the at least one water tank (12) and the at least one ejector (18) are fluidically connected by the at least one water loop circuit (20),
- wherein the at least one inlet pipe (4) is fluidically connected to the at least one ejector (18),
- wherein the at least one outlet pipe (8) is fluidically connected to the at least one water loop circuit (20),
- wherein the at least one water loop circuit (20) is configured to guide a circulating water flow (22) from the at least one water tank (12), alongside the at least one ejector (18), through the at least one water turbine (10) back into the at least one water tank (12),
- wherein the at least one ejector (18) in particular is configured to at least partly suck the circulating water flow (22) from the at least one water tank (12),
- wherein the at least one inlet pipe (4) is configured to provide the motive water flow (6) to the at least one water loop circuit (20) through the at least one ejector (18),
- wherein the current of the motive water flow (6) substantially corresponds to the current of the outlet water flow (7) and
- wherein the at least one ejector (18) is located at the outlet (14) of the at least one water tank (12).

2. Hydroelectric power station (2) according to claim 1,
**characterised in that**,
the at least one water turbine (10) is located at the inlet (16) of the at least one water tank (12).

3. Hydroelectric power (2) station according to claim 1 or 2,
**characterised in that**,
the at least one water tank (12) comprises at least two chambers (24,27), wherein the at least two chambers (24,27) are fluidically connected by at least one more water turbine (26).

4. Hydroelectric power station (2) according to any one of claims 1 to 3,
**characterised in that**,
at least one further water turbine (28) is fluidically connected to the at least one outlet pipe (8).

5. Hydroelectric power station (2) according to any one of claims 1 to 4,
**characterised in that**,
the at least one water turbine (10), the at least one more water turbine (26) and/or the at least one further water turbine (28) is a bulb turbine and/or a Kaplan turbine.

6. Hydroelectric power station (2) according to any one of claims 1 to 5,
**characterised in that**,
- the at least one water tank (12) is at least partly located at the substantially lowest point of the at least one water loop circuit (20); and/ or
- the at least one outlet pipe (8) is fluidically connected to the at least one water loop circuit (20) at the highest point of the at least one water loop circuit (20).

7. Hydroelectric power station according to any of the claims 1 to 6,
**characterized in that**,
- the motive water flow (6) is supplied to the inlet pipe (4) via a reservoir pipe (9),
- the reservoir pipe (9) is fluidically connected to a bypass inlet pipe (34),
- the bypass inlet pipe (34) is fluidically connected to at least one bypass turbine (40),
- the bypass turbine (40) is fluidically connected to a bypass outlet pipe (42),
- wherein the bypass outlet pipe (42) and the at least one outlet pipe (8) discharge into a tail box (44) and
- wherein the motive water flow (6) is at least partly divertible via least one valve (36, 38) from the inlet pipe (9) to the bypass inlet pipe (34).

8. Hydroelectric power system,
**characterised in that**,
the hydroelectric power system (32) comprises at least two hydroelectric power stations (2) according to one of the claims 1 to 7, wherein the at least two hydroelectric power stations (2) are connected in series.

9. Method for generating electrical energy from hydroelectric power, using a hydroelectric power station (2) according to any one of claims 1 to 8,
- wherein a motive water flow (6) is supplied by at least one inlet pipe (4) to at least one ejector (18),
- wherein the motive water flow (6) is fed into at least one water loop circuit (20) by the at least one ejector (18),
- wherein water is sucked from at least one water tank (12) by the motive water flow (6) in order to generate a circulating water flow (22),
- wherein an outlet water flow (7) is separated from the circulating water flow (22) and the outlet water flow (7) is discharged from the at least one water loop circuit (20) by at least one outlet pipe (8),
- wherein the circulating water flow (22) is guided to at least one water turbine (10) for driving a generator by the at least one water loop circuit (20),
- wherein the circulating water flow (22) is guided into the at least one water tank (12) by the at least one water loop circuit (20) and,
- wherein the current of the motive water flow (6) substantially corresponds to the current of the outlet water flow (7).

10. Method according to claim 9,
**characterised in that**,
the circulating water flow (22) is sucked from an outlet (14) of the at least one water tank (12) by the at least one ejector (18).

11. Method according to claim 9 or 10,
**characterised in that**,
the circulating water flow (22) is fed into the at least one water tank (12) after passing the at least one water turbine (10).

12. Method according to any one of claims 9 to 11,
**characterised in that**,
the circulating water flow (22) is guided through at least two chambers (24,27) of the at least one water tank (12),
wherein the circulating water flow (22) is guided through at least one more water turbine (26) in between the at least two chambers (24,27) of the at least one water tank (12).

13. Method according to any one of claims 9 to 12,
**characterised in that**,
the outlet water flow (7) is guided to at least one further water turbine (28) by the at least one outlet pipe (8).

14. Method according to any one of claims 9 to 13,
**characterised in that**,
the outlet water flow (7) is separated from the circulating water flow (22) and the outlet water flow (7) is discharged from the at least one water loop circuit (20) by the at least one outlet pipe (8) at the highest point of the at least one water loop circuit (20).

## Patentansprüche

1. Wasserkraftwerk (2) zur Erzeugung von elektrischer Energie aus Wasserkraft
- mit mindestens einem Einlassleitung (4) zur Zuführung eines Treibwasserstroms (6) zum Wasserkraftwerk (2),
- mit mindestens einer Auslassleitung (8) zur Ableitung eines Austrittswasserstroms (7),
- mit mindestens einer Wasserturbine (10) zum Antrieb eines Generators zur Erzeugung elektrischer Energie,
- mit mindestens einem Wassertank (12), wobei der Wassertank (12) einen Auslass (14) und einen Einlass (16) aufweist,
- mit mindestens einem Ejektor (18),
- mit mindestens einem Wasserkreislauf (20),
- wobei die mindestens eine Wasserturbine (10), der mindestens eine Wassertank (12) und der mindestens eine Ejektor (18) durch den mindestens einen Wasserkreislauf (20) strömungstechnisch verbunden sind,
- wobei die mindestens eine Einlassleitung (4) strömungstechnisch mit dem mindestens einen Ejektor (18) verbunden ist,
- wobei die mindestens eine Auslassleitung (8) strömungstechnisch mit dem mindestens einen Wasserkreislauf (20) verbunden ist,
- wobei der mindestens eine Wasserkreislauf (20) so konfiguriert ist, dass er einen zirkulierenden Wasserstrom (22) von dem mindestens einen Wassertank (12) entlang des mindestens einen Ejektors (18) durch die mindestens eine Wasserturbine (10) zurück in den mindestens einen Wassertank (12) leitet,
- wobei der mindestens eine Ejektor (18) insbesondere dazu ausgebildet ist, den zirkulierenden Wasserstrom (22) zumindest teilweise aus dem mindestens einen Wassertank (12) anzusaugen,
- wobei die mindestens eine Einlassleitung (4) dazu ausgebildet ist, den Treibwasserstrom (6) über den mindestens einen Ejektor (18) dem mindestens einen Wasserkreislauf (20) zuzuführen,
- wobei der Strom des Treibwasserstroms (6) im Wesentlichen dem Strom des Austrittswasserstroms (7) entspricht und
- wobei der mindestens eine Ejektor (18) am Auslass (14) des mindestens einen Wassertanks (12) angeordnet ist.

2. Wasserkraftwerk (2) nach Anspruch 1,
**dadurch gekennzeichnet, dass**,
die mindestens eine Wasserturbine (10) am Einlass (16) des mindestens einen Wassertanks (12) angeordnet ist.

3. Wasserkraftwerk (2) nach Anspruch 1 oder 2,
**dadurch gekennzeichnet, dass**,
der mindestens eine Wassertank (12) mindestens zwei Kammern (24, 27) umfasst,
wobei die mindestens zwei Kammern (24, 27) durch mindestens eine weitere Wasserturbine (26) strömungstechnisch verbunden sind.

4. Wasserkraftwerk (2) nach einem der Ansprüche 1 bis 3,
**dadurch gekennzeichnet, dass**,
mindestens eine weitere Wasserturbine (28) mit der mindestens einen Auslassleitung (8) strömungstechnisch verbunden ist.

5. Wasserkraftwerk (2) nach einem der Ansprüche 1 bis 4,
**dadurch gekennzeichnet, dass**,
die mindestens eine Wasserturbine (10), die mindestens eine weitere Wasserturbine (26) und/oder die mindestens eine weitere Wasserturbine (28) eine Rohrturbine und/oder eine Kaplanturbine ist.

6. Wasserkraftwerk (2) nach einem der Ansprüche 1 bis 5,
**dadurch gekennzeichnet, dass**,
- der mindestens eine Wassertank (12) zumindest teilweise an der im Wesentlichen tiefsten Stelle des mindestens einen Wasserkreislaufs (20) angeordnet ist; und/ oder
- die mindestens eine Auslassleitung (8) am höchsten Punkt des mindestens einen Wasserkreislaufs (20) mit dem mindestens einen Wasserkreislauf (20) strömungstechnisch verbunden ist.

7. Wasserkraftwerk nach einem der Ansprüche 1 bis 6,
**dadurch gekennzeichnet, dass**,
- der Treibwasserstrom (6) der Einlassleitung (4) über eine Speicherleitung (9) zugeführt wird,
- die Speicherleitung (9) mit einer Bypass-Einlassleitung (34) strömungstechnisch verbunden ist,
- die Bypass-Einlassleitung (34) ist strömungstechnisch mit mindestens einer Bypass-Turbine (40) verbunden,
- die Bypass-Turbine (40) strömungstechnisch mit einer Bypass-Auslassleitung (42) verbunden ist,
- wobei die Bypass-Auslassleitung (42) und die mindestens eine Auslassleitung (8) in einen Endkasten (44) münden und
- wobei der Treibwasserstrom (6) zumindest teilweise über mindestens ein Ventil (36, 38) von der Speicherleitung (9) zur Bypass-Einlassleitung (34) umleitbar ist.

8. Wasserkraftsystem,
**dadurch gekennzeichnet, dass**,
das Wasserkraftsystem (32) mindestens zwei Wasserkraftwerke (2) nach einem der Ansprüche 1 bis 7 umfasst, wobei die mindestens zwei Wasserkraftwerke (2) in Reihe geschaltet sind.

9. Verfahren zur Erzeugung von elektrischer Energie aus Wasserkraft, mit einem Wasserkraftwerk (2) nach einem der Ansprüche 1 bis 8,
- wobei ein Triebwasserstrom (6) über mindestens eine Einlassleitung (4) mindestens einem Ejektor (18) zugeführt wird,
- wobei der Treibwasserstrom (6) durch den mindestens einen Ejektor (18) in mindestens einen Wasserkreislauf (20) eingespeist wird,
- wobei durch den Treibwasserstrom (6) Wasser aus mindestens einem Wassertank (12) angesaugt wird, um einen zirkulierenden Wasserstrom (22) zu erzeugen,
- wobei ein Austrittswasserstrom (7) von dem zirkulierenden Wasserstrom (22) getrennt wird und der Austrittswasserstrom (7) durch mindestens eine Auslassleitung (8) aus dem mindestens einen Wasserkreislauf (20) abgeleitet wird,
- wobei der zirkulierende Wasserstrom (22) durch den mindestens einen Wasserkreislauf (20) zu mindestens einer Wasserturbine (10) zum Antrieb eines Generators geführt wird,
- wobei der zirkulierende Wasserstrom (22) durch den mindestens einen Wasserkreislauf (20) in den mindestens einen Wassertank (12) geleitet wird und,
- wobei der Strom des Treibwasserstroms (6) im Wesentlichen dem Strom des Austrittswasserstroms (7) entspricht.

10. Verfahren nach Anspruch 9,
**dadurch gekennzeichnet, dass**,
der zirkulierende Wasserstrom (22) von einem Auslass (14) des mindestens einen Wassertanks (12) durch den mindestens einen Ejektor (18) angesaugt wird.

11. Verfahren nach Anspruch 9 oder 10,
**dadurch gekennzeichnet, dass**,
der zirkulierende Wasserstrom (22) nach Passieren der mindestens einen Wasserturbine (10) in den mindestens einen Wassertank (12) eingespeist wird.

12. Verfahren nach einem der Ansprüche 9 bis 11,
**dadurch gekennzeichnet, dass**,
der zirkulierende Wasserstrom (22) durch mindestens zwei Kammern (24, 27) des mindestens einen Wassertanks (12) geführt wird,
wobei der zirkulierende Wasserstrom (22) durch mindestens eine weitere Wasserturbine (26) zwischen den mindestens zwei Kammern (24, 27) des mindestens einen Wassertanks (12) geführt wird.

13. Verfahren nach einem der Ansprüche 9 bis 12,
**dadurch gekennzeichnet, dass**,
der Austrittswasserstrom (7) durch die mindestens eine Auslassleitung (8) zu mindestens einer weiteren Wasserturbine (28) geführt wird.

14. Verfahren nach einem der Ansprüche 9 bis 13,
**dadurch gekennzeichnet, dass**,
der Austrittswasserstrom (7) von dem zirkulierenden Wasserstrom (22) getrennt wird und der Austrittswasserstrom (7) durch die mindestens eine Auslassleitung (8) am höchsten Punkt des mindestens einen Wasserkreislaufs (20) aus dem mindestens einen Wasserkreislauf (20) abgeführt wird.

## Revendications

1. Centrale hydroélectrique (2) pour la production d'énergie électrique à partir d'énergie hydroélectrique
- avec au moins un tuyau d'entrée (4) pour fournir un écoulement d'eau motrice (6) à la centrale hydroélectrique (2),
- avec au moins un tuyau de sortie (8) pour décharger un flux d'eau de sortie (7),
- avec au moins une turbine hydraulique (10) pour entraîner un générateur afin de produire de l'énergie électrique,
- avec au moins un réservoir d'eau (12), dans lequel le réservoir d'eau (12) comprend une sortie (14) et une entrée (16),
- avec au moins un éjecteur (18),
- avec au moins un circuit de boucle d'eau (20),
- dans lequel la au moins une turbine hydraulique (10), le au moins un réservoir d'eau (12) et le au moins un éjecteur (18) sont reliés fluidiquement par le au moins un circuit de boucle d'eau (20),
- dans lequel l'au moins un tuyau d'entrée (4) est relié fluidiquement à l'au moins un éjecteur (18),
- dans lequel l'au moins un tuyau de sortie (8) est relié fluidiquement à l'au moins un circuit de boucle d'eau (20),
- dans lequel l'au moins un circuit de boucle d'eau (20) est configuré pour guider un flux d'eau circulant (22) depuis l'au moins un réservoir d'eau (12), le long de l'au moins un éjecteur (18), à travers l'au moins une turbine hydraulique (10) pour revenir dans l'au moins un réservoir d'eau (12),
- dans lequel l'au moins un éjecteur (18) est en particulier configuré pour aspirer au moins partiellement le flux d'eau en circulation (22) à partir de l'au moins un réservoir d'eau (12),
- dans lequel l'au moins un tuyau d'entrée (4) est configuré pour fournir le flux d'eau motrice (6) à l'au moins un circuit de boucle d'eau (20) à travers l'au moins un éjecteur (18),
- dans lequel le courant de l'écoulement d'eau motrice (6) correspond sensiblement au courant de l'écoulement d'eau de sortie (7) et
- dans lequel l'au moins un éjecteur (18) est situé à la sortie (14) de l'au moins un réservoir d'eau (12).

2. Centrale hydroélectrique (2) selon la revendication 1,
**caractérisée en ce que**,
l'au moins une turbine hydraulique (10) est située à l'entrée (16) de l'au moins un réservoir d'eau (12).

3. Centrale hydroélectrique (2) selon la revendication 1 ou 2,
**caractérisée en ce que**,
le au moins un réservoir d'eau (12) comprend au moins deux chambres (24, 27),
dans laquelle les au moins deux chambres (24, 27) sont reliées fluidiquement par au moins une autre turbine hydraulique (26).

4. Centrale hydroélectrique (2) selon l'une quelconque des revendications 1 à 3,
**caractérisée en ce que**,
au moins une autre turbine hydraulique (28) est reliée fluidiquement à la au moins un tuyau de sortie (8).

5. Centrale hydroélectrique (2) selon l'une quelconque des revendications 1 à 4,
**caractérisée en ce que**,
la au moins une turbine hydraulique (10), la au moins une autre turbine hydraulique (26) et/ou la au moins une autre turbine hydraulique (28) est une turbine à bulbe et/ou une turbine Kaplan.

6. Centrale hydroélectrique (2) selon l'une quelconque des revendications 1 à 5,
**caractérisée en ce que**,
- le au moins un réservoir d'eau (12) est au moins partiellement situé au point sensiblement le plus bas du au moins un circuit de boucle d'eau (20) ; et/ou
- le au moins un tuyau de sortie (8) est relié fluidiquement au au moins un circuit de boucle d'eau (20) au point le plus haut du au moins un circuit de boucle d'eau (20).

7. Centrale hydroélectrique selon l'une quelconque des revendications 1 à 6,
**caractérisée en ce que**,
- le débit d'eau motrice (6) est fourni au tuyau d'entrée (4) par un tuyau réservoir (9),
- le tuyau réservoir (9) est relié fluidiquement à un tuyau d'entrée de dérivation (34),
- le tuyau d'entrée de dérivation (34) est relié fluidiquement à au moins une turbine de dérivation (40),
- la turbine de dérivation (40) est reliée fluidiquement à un tuyau de sortie de dérivation (42),
- dans lequel le tuyau de sortie de dérivation (42) et le au moins un tuyau de sortie (8) se déchargent dans une boîte de queue (44) et
- dans lequel le flux d'eau motrice (6) peut être au moins partiellement dévié par l'intermédiaire d'au moins une vanne (36, 38) depuis le tuyau d'entrée (9) vers le tuyau d'entrée de dérivation (34).

8. Système d'énergie hydroélectrique,
**caractérisé en ce que**,
le système d'énergie hydroélectrique (32) comprend au moins deux centrales hydroélectriques (2) selon l'une des revendications 1 à 7, dans lequel les au moins deux centrales hydroélectriques (2) sont connectées en série.

9. Procédé de production d'énergie électrique à partir d'énergie hydroélectrique, utilisant une centrale hydroélectrique (2) selon l'une quelconque des revendications 1 à 8,
- dans lequel un flux d'eau motrice (6) est fourni par au moins un tuyau d'entrée (4) à au moins un éjecteur (18),
- dans lequel le flux d'eau motrice (6) est alimenté dans au moins un circuit de boucle d'eau (20) par le au moins un éjecteur (18),
- dans lequel l'eau est aspirée d'au moins un réservoir d'eau (12) par le flux d'eau motrice (6) afin de générer un flux d'eau de circulation (22),
- dans lequel un écoulement d'eau de sortie (7) est séparé de le flux d'eau de circulation (22) et l'écoulement d'eau de sortie (7) est évacué du au moins un circuit de boucle d'eau (20) par au moins un tuyau de sortie (8),
- dans lequel le flux d'eau en circulation (22) est guidé vers au moins une turbine hydraulique (10) pour entraîner un générateur par le au moins un circuit de boucle d'eau (20),
- dans lequel le flux d'eau de circulation (22) est guidé dans le au moins un réservoir d'eau (12) par le au moins un circuit de boucle d'eau (20) et,
- dans lequel le courant du flux d'eau motrice (6) correspond sensiblement au courant du flux d'eau de sortie (7).

10. Procédé selon la revendication 9,
**caractérisé en ce que**
le flux d'eau de circulation (22) est aspiré depuis une sortie (14) de l'au moins un réservoir d'eau (12) par l'au moins un éjecteur (18).

11. Procédé selon la revendication 9 ou 10,
**caractérisé en ce que**,
le flux d'eau en circulation (22) est introduit dans le au moins un réservoir d'eau (12) après avoir traversé la au moins une turbine hydraulique (10).

12. Procédé selon l'une quelconque des revendications 9 à 11,
**caractérisé en ce que**,
le flux d'eau en circulation (22) est guidé à travers au moins deux chambres (24, 27) de l'au moins un réservoir d'eau (12),
dans lequel le flux d'eau circulant (22) est guidé à travers au moins une autre turbine hydraulique (26) entre les au moins deux chambres (24, 27) de l'au moins un réservoir d'eau (12).

13. Procédé selon l'une quelconque des revendications 9 à 12,
**caractérisé en ce que**,
le flux d'eau de sortie (7) est guidé vers au moins une autre turbine à eau (28) par le au moins un tuyau de sortie (8).

14. Procédé selon l'une quelconque des revendications 9 à 13,
**caractérisé en ce que**,
le flux d'eau de sortie (7) est séparé du flux d'eau de circulation (22) et le flux d'eau de sortie (7) est évacué de l'au moins un circuit de boucle d'eau (20) par l'au moins un tuyau de sortie (8) au point le plus élevé de l'au moins un circuit de boucle d'eau (20).
